# EUROPÄISCHE PATENTSCHRIFT

(11) **EP 2 686 560 B1**
(45) Veröffentlichungstag und Bekanntmachung des Hinweises auf die Patenterteilung: **12.04.2017**
(21) Anmeldenummer: 12704368.5
(22) Anmeldetag: 10.02.2012
(51) Int. Cl.: F15B 11/05

(54) **HILFSANTRIEB FÜR ARBEITSGERÄTE**
AUXILIARY DRIVE FOR WORKING IMPLEMENTS
ENTRAÎNEMENT AUXILIAIRE POUR ENGINS DE TRAVAIL

(30) Priorität: 12.03.2011 DE 102011013771
(43) Veröffentlichungstag der Anmeldung: 22.01.2014
(73) Patentinhaber: Robert Bosch GmbH, 70442 Stuttgart (DE)
(72) Erfinder: JESSEN, Soenke, 71732 Tamm (DE)
(74) Vertreter: Thürer, Andreas
(86) Internationale Anmeldenummer: PCT/EP2012/000597
(87) Internationale Veröffentlichungsnummer: WO 2012/123056

(56) Entgegenhaltungen:
- EP-A1- 2 064 933
- EP-A2- 1 672 225
- DE-A1- 4 228 599
- DE-A1- 19 831 595
- DE-A1-102004 033 315

## Beschreibung

Die Erfindung betrifft eine Kombination aus einer mobilen Arbeitsmaschine und einem Arbeitsgerät - insbesondere Aufsattelgerät oder Anhänger - mit einem Hilfsantrieb.

An mobile Arbeitsmaschinen wie z.B. Traktoren mit vorzugweise vier angetriebenen Rädern werden Anhänger oder über Hubwerke Arbeitsgeräte angekuppelt, wobei letztere oft zusätzliche Stützräder haben, damit zumindest im Betrieb nicht die gesamte Gewichtskraft des Arbeitsgerätes über das Hubwerk vom Traktor getragen werden muss. So kommen z.B. bei Pflügen zu der Gewichtskraft noch nach unten gerichtete Scharkräfte hinzu, so dass im Betrieb mehrere Stützräder bzw. ein Fahrwerk am Pflug erforderlich sein können. Meistens sind diese Räder nicht angetrieben und folgen dem ziehenden Traktor rollend.

Wenn die nötige Zugkraft in besonderen Einsatzsituationen am Traktor mit Arbeitsgerät oder Anhänger zu groß wird, erhöht sich der Schlupf an den Traktorrädern und diese Räder drehen durch, womit der Dieselverbrauch steigt und die Arbeits- bzw. Fahrgeschwindigkeit sinkt. Um diesen Effekt zu verringern, beschreibt die Veröffentlichung "Simulation eines hydraulischen Hilfsantriebs für ein land- und forstwirtschaftliches Transportaggregat (TA)" aus der Zeitschrift "Landtechnik" 3/2007 ein Vierradtraktor mit einem Einachsanhänger, wobei die Achse des Anhängers mit einem hydraulischen Hilfsantrieb versehen ist. Bei diesem Hilfsantrieb treibt die von der Drehzahl des Traktormotors abhängige Zapfwelle eine Hydropumpe an, von der Druckmittel über ein Wegeventil einem Hydromotor zugeführt wird. Über das Wegeventil wird eine der beiden möglichen Strömungsrichtungen des offenen Hydraulikkreislaufes gewählt, so dass der Hilfsantrieb entsprechend für beide Strömungsrichtungen und somit für beide Drehrichtungen geeignet ist. Die Drehbewegung des Hydromotors wird mechanisch über ein Zusatzgetriebe, eine Kardanwelle und ein Differenzialgetriebe an die Räder des Anhängers übertragen.

Die Zuschaltung des Hilfsantriebs erfolgt automatisch, wenn ein Schlupf-Grenzwert an den angetriebenen Traktorrädern überschritten wird. Die Schlupfmessung erfolgt über einen Vergleich der Drehgeschwindigkeiten der angetriebenen Traktorräder und der während der Messung (noch) rollenden Räder des Anhängers.
Nachteilig an derartigen hydraulischen Hilfsantrieben ist, dass das Drehmoment und die Drehzahl der Anhängerräder bei Zuschaltung des Hilfsantriebes stets in einem unveränderlichen Verhältnis zum Drehmoment und zur Drehzahl der Zapfwelle und damit zur Drehzahl der Kurbelwelle des Traktormotors stehen.
Aus der DE 10 2007 057 655 A1 ist eine Kombination aus einer mobilen Arbeitsmaschine bzw. Zugmaschine und einem Arbeitsgerät oder Anhänger bekannt. Mindestens ein belastetes Rad am Arbeitsgerät oder am Anhänger weist einen drehmomentgeregelten Hilfsantrieb auf. Dadurch kann individuell je nach Betriebszustand der Kombination eine Schubkraft zugeschaltet und eingestellt werden. So kann die Gewichtskraft, die auf den Rädern des Arbeitsgerätes oder Anhängers lastet, sinnvoll genutzt werden. Insbesondere, wenn die angetriebenen Räder der ziehenden mobilen Arbeitsmaschine ungewollten Schlupf aufweisen, kann an dem antreibbaren Rad das Drehmoment zugeschaltet werden.

Auch Dokument EP1672225 offenbart eine Kombination aus einer mobilen Arbeitsmaschine und einem Arbeitsgerät. Nachteilig an derartigen hydraulischen Hilfsantrieben ist, dass die Drehmomentregelung über ein drosselndes Wegeventil erfolgt, so dass der hydraulische Hilfsantrieb entsprechend verlustbehaftet ist.
Dem gegenüber liegt der vorliegenden Erfindung die Aufgabe zu Grunde eine Kombination aus mobiler Arbeitsmaschine und Arbeitsgerät mit einem hydraulischen Hilfsantrieb zu schaffen, dessen Verluste minimiert und dessen Wirkungsgrad verbessert ist.
Diese Aufgabe wird gelöst durch eine Kombination aus mobiler Arbeitsmaschine und Arbeitsgerät nach Patentanspruch 1.

Die erfindungsgemäße Kombination besteht aus einer mobilen Arbeitsmaschine und einem gezogenen oder geschobenem Arbeitsgerät, das über zumindest ein rotierendes Element - z.B. ein Stützrad oder eine Walze - am Boden abstützbar ist. Dabei ist ein aktivierbarer und deaktivierbarer hydraulischer Antrieb mit einer Verstellpumpe und einem Hydromotor für das rotierende Element vorgesehen. Ein Versorgungsdruck des Hydromotors ist durch eine Maximaldruckbegrenzung (Druckabschneidung) der Verstellpumpe bestimmt. Damit kann dem Hydromotor ein der aktuellen Fahrgeschwindigkeit der mobilen Arbeitsmaschine entsprechendes Schluckvolumen durch Einstellung eines Schwenkwinkels der Verstellpumpe bereit gestellt werden. Des Weiteren wird der Versorgungsdruck des hydraulischen Antriebs und insbesondere des Hydromotors durch vergleichsweise feine Regelung des Schwenkwinkels der Verstellpumpe im Wesentlichen auf konstantem Niveau (z.B. 200 bar) gehalten. Damit ist eine verlustreduzierte Drehmomentsteuerung für den hydraulischen Antrieb geschaffen, der dabei an verschieden Fahrgeschwindigkeiten angepasst ist. Somit baut sich in Fahrtrichtung der Kombination vor dem rotierenden Element kein Erdhaufen bzw. kein Erdwall auf, der die Fahrt behindert oder hemmt.

Bei einer besonders bevorzugten Weiterbildung ist der Hydromotor über ein Wegeventil an die Verstellpumpe angeschlossen. Damit kann der Antrieb zu- oder abgeschaltet werden.

Vorzugsweise ist das Wegeventil bei aktiviertem Antrieb immer voll geöffnet. Damit ist der Leistungsverlust an dem Wegeventil minimiert, da es kaum drosselnde Wirkung hat.

Vorzugsweise wird das Wegeventil bei deaktiviertem hydraulischem Antrieb in eine Schwimmstellung geschaltet. Damit können das rotierende Element und der Hydromotor mitdrehen und der deaktivierte Antrieb bzw. Druckmittelumlauf ist dabei widerstandsarm geschaltet.

Bei einer besonders bevorzugten Weiterbildung der erfindungsgemäßen Kombination ist das Arbeitsgerät über ein Hubwerk an die mobile Arbeitsmaschine angekoppelt, das eine elektronische Hubwerksregelung (EHR) hat. Das Wegeventil kann dann in Abhängigkeit von Signalen dieser Hubwerksregelung geregelt werden. Insbesondere ein Aktivieren des Antriebs über das Wegeventil kann in Abhängigkeit der Hubwerksregelung vorgenommen werden, wenn das Hubwerk das Arbeitsgerät leicht anhebt, da seine Widerstandskräfte am oder im Boden zu groß geworden sind. Oder das Aktivieren des Antriebs über das Wegeventil wird vorgenommen, wenn das Hubwerk das Arbeitsgerät am Boden absetzt und damit zu rechnen ist, dass die von der mobilen Arbeitsmaschine übertragbare Zugkraft nicht reichen wird, um das Arbeitsgerät zu ziehen.

Dem Wegeventil kann eine Druckwaage zugeordnet sein. Diese kann stromaufwärts des Wegeventils angeordnet sein. Der Regelkolben der Druckwaage ist von einer Feder und von einem stromabwärts des Wegeventils abgegriffenen Steuerdruck in Öffnungsrichtung beaufschlagt, während er von einem stromaufwärts des Wegeventils abgegriffenen Steuerdruck in Schließrichtung beaufschlagt ist. Wenn es keine weiteren an die Verstellpumpe angeschlossenen Verbraucher gibt, die gerade parallel betrieben werden und deren Last höher als diejenige des Hydromotors ist, ist die Druckwaage weitgehend geöffnet, um ihre Verlustleistung und damit die Verlustleistung des Antriebs gering zu halten.

Die Kombination kann neben dem Arbeitgerät und dem Hubwerk weitere von der Verstellpumpe versorgbare Verbraucher mit Druckwaagen haben, die den entsprechenden Zumessblenden zugeordnet sind. Der Schwenkwinkel der Verstellpumpe wird dann über ein Lastmeldesystem in Abhängigkeit so eingestellt, dass der Pumpendruck um eine bestimmte Druckdifferenz über dem höchsten Lastdruck liegt.

Bei einer bevorzugten Weiterbildung ist der Hydromotor über eine Hochdruckleitung und eine Niederdruckleitung mit jeweils einem Schnellkuppelanschluss an die Hydraulik der Arbeitsmaschine, insbesondere an eine Traktorhydraulik angeschlossen. Damit ist ein einfacher Ab- und Anbau bzw. ein einfaches Ab- und Ankuppeln des Arbeitsgerätes möglich.

Vorzugsweise sind die Verstellpumpe, die Druckwaage und das Wegeventil an der mobilen Arbeitsmaschine angeordnet, während der Hydromotor, ein von der Niederdruckleitung zur Hochdruckleitung öffnendes Rückschlagventil und ein von der Hochdruckleitung zur Niederdruckleitung öffnendes Druckbegrenzungsventil am Arbeitsgerät angeordnet sind. So ist an der mobilen Arbeitsmaschine der Teil des erfindungsgemäßen Antriebs angeordnet, der an modernen Traktoren der gehobenen Leistungsklasse oft bereits als Standard vorgesehen ist. Über das Rückschlagventil kann Druckmittel abströmen und umlaufen, wenn der Hydromotor durch das gezogene rotierende Element zur Pumpe wird.

Vorzugsweise ist in der mechanischen Momentenübertragung von dem Hydromotor zum rotierenden Element ein Freilauf angeordnet, durch den verhindert wird, dass der Hydromotor zur Pumpe umfunktioniert wird, wenn das Rad gezogen wird. So kann das rotierende Element ungehemmt rollen, und es wird keine unnötige Wärme im hydraulischen System erzeugt.

Vorzugsweise ist der Hydromotor ein Radialkolbenmotor, da dieser Motorentyp für niedrige Drehzahlen und hohe Drehmomente geeignet ist, so wie sie in der erfindungsgemäßen Kombination auftreten.

Bei einem bevorzugten Anwendungsfall ist die mobile Arbeitsmaschine ein Traktor, und/oder das Arbeitsgerät ist ein Aufsattelpflug oder ein Karrenpflug oder eine Kombination aus beiden Pflugtypen. Pflüge weisen zusätzlich zu ihrer Gewichtskraft eine nach unten gerichtete Kraft auf, die von dem durch die Schare angehobenen Erdreich herrührt. Somit kann bei Pflügen eine besonders hohe Traktion zur Übertragung des Drehmoments des rotierenden Elements genutzt werden.

Das Arbeitsgerät kann auch ein Anhänger sein.

Der hydraulische Antrieb kann einen offenen hydraulischen Kreislauf haben.

Über eine Änderung des Schluckvolumens des Hydromotors kann das Drehmoment, das bei eingeschaltetem Antrieb zur Verfügung steht, geändert werden. Gemäß einer ersten Variante zu dieser Weiterbildung wird bei der Auslegung des Arbeitsgerätes ein Hydromotor mit einem Schluckvolumen gewählt, der bei dem von der Verstellpumpe erzeugbaren Druck (z.B. 200bar) ein gewünschtes Drehmoment erzeugt. Gemäß einer zweiten Variante zu dieser Weiterbildung könnte ein Verstellmotor vorgesehen sein.

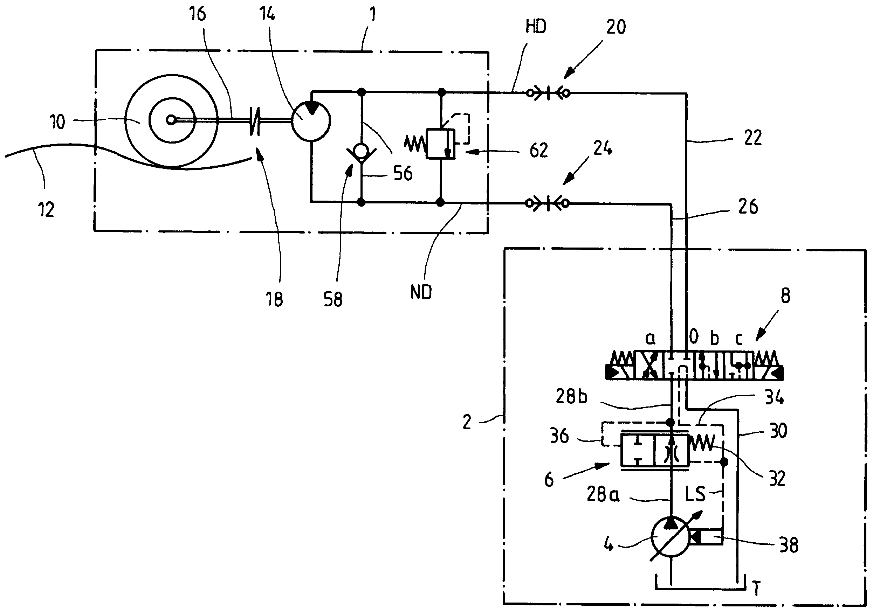

Anhand der Figur wird im Folgenden zunächst der Aufbau der bevorzugten Ausführungsform der erfindungsgemäßen Kombination aus Traktor und Aufsattelpflug beschrieben.

Die Figur zeigt eine pflugseitige Anordnung 1 und eine traktorseitige Anordnung 2, die zusammen ein Ausführungsbeispiel eines erfindungsgemäßen hydraulischen Antriebs ergeben. Dieser hat traktorseitig einen Tank T, eine Verstellpumpe 4, eine Druckwaage 6 und ein Wegeventil 8. Die pflugseitige Anordnung 1 hat ein Stützrad 10, das über einen Acker 12 rollt oder fährt. Dabei ist das Stützrad 10 mechanisch über eine Welle 16 an einen Hydromotor 14 gekoppelt. In der Welle 16 ist ein Freilauf 18 angeordnet, der das Stützrad 10 vom Hydromotor 14 entkoppelt, wenn es schneller als der Hydromotor 14 dreht.

Der Hydromotor 14 ist einerseits über eine Hochdruckleitung HD, über einen Schnellkuppelanschluss 20 und über eine erste Arbeitsleitung 22 mit dem Wegeventil 8 und andererseits über eine Niederdruckleitung ND, einen Schnellkuppelanschluss 24 und eine zweiten Arbeitsleitung 26 mit dem Wegeventil 8 verbunden.

Das Wegeventil 8 ist als 5/4-Wegeventil ausgebildet, das einerseits an die beiden Arbeitsleitungen 22, 26 und andererseits an eine Pumpenleitung 28a, 28b und an eine Tankleitung 30 angeschlossen ist.

Ein Ventilkörper des Wegeventils 8 hat vier Stellungen a, 0, b, c. Dabei ist in der Figur in einer Absperrstellung 0 gezeigt, bei der die Pumpenleitung 28a, 28b von der ersten Arbeitsleitung 22 und die zweite Arbeitsleitung 26 von der Tankleitung 30 getrennt sind. Damit ist der erfindungsgemäße hydraulische Antrieb des Stützrades 10 ausgeschaltet. Wenn das Wegeventil 8 über seine in der Figur seitlich dargestellte Aktuatoren in die Schaltstellung a geschaltet wird, wird von der Verstellpumpe 4 aus dem Tank T Druckmittel angesaugt und über die Pumpenleitung 28a, 28b, die erste Arbeitsleitung 22 und über die Hochdruckleitung HD zum Hydromotor 14 gefördert, so dass dieser das Stützrad 10 über die Welle 16 drehend antreibt. Das entspannte Druckmittel strömt aus dem Hydromotor 14 über die Niederdruckleitung ND, die zweite Arbeitsleitung 26 und über die Tankleitung 30 zurück zum Tank T. Damit ist der hydraulische Antrieb über einen offenen Kreislauf realisiert.

Die Schaltstellung b des Wegeventils 8 wird in einem Sonderfall genutzt, bei dem der Bediener bzw. Fahrer des Traktors versehentlich die traktorseitige erste Arbeitsleitung 22 mit der pflugseitigen Niederdruckleitung ND über einen der Schnellkuppelanschlüsse 20, 24 verbunden hat und entsprechend die zweite Arbeitsleitung 26 über einen der Schnellkuppelanschlüsse 20, 24 mit der Hochdruckleitung HD verbunden hat. In diesem Fall wird das Wegeventil 8 zur Aktivierung des Antriebs in die Schaltstellung b geschaltet, so dass die Pumpenleitung 28a, 28b über die zweite Arbeitsleitung 26 mit der pflugseitigen Hochdruckleitung HD verbunden ist.

Weiterhin ist am Wegeventil 8 eine Schaltstellung c vorgesehen, bei der die beiden Arbeitsleitungen 22, 26 miteinander und weiterhin mit der Tankleitung 30 verbunden sind. Damit ist der Antrieb in eine Schwimmstellung geschaltet, bei der mehrere Leitungen HD, ND, 22, 26 und insbesondere der Hydromotor 14 druckentlastet sind, wobei das Druckmittel beliebig zwischen den Leitungen HD, ND, 22, 26 strömen kann. Ausgenommen von der Druckentlastung durch die Schwimmstellung c des Wegeventils 8 ist die Pumpenleitung 28a, 28b, die dann abgesperrt ist.

Zwischen zwei Abschnitten 28a, 28b der Pumpenleitung ist die Druckwaage 6 angeordnet, die als Individual-Druckwaage dem Hydromotor 14 zugeordnet ist und ein stetig verstellbares 2/2-Wegeventil beinhaltet. Prinzipiell dienen derartige Druckwaagen dazu, den Druckabfall über einer Zulaufmessblende lastunabhängig konstant zu halten. Dieser Druckabfall entspricht dem Druckäquivalent einer Druckwaagenfeder 32, die einen Ventilkörper der Druckwaage 6 in Richtung einer gedrosselten Durchgangsstellung (in der Figur rechts dargestellt) beaufschlagt. In gleicher Richtung wirkt über eine Steuerleitung 34 der Druck stromab der Zumessblende. Dem entgegengesetzt in Schließrichtung der Druckwaage 6 wirkt über eine Steuerleitung 36 der Druck, der zwischen der Druckwaage 6 und der Zumessblende herrscht.

Der Druck in der Steuerleitung 34 beziehungsweise der höchste Lastdruck aller zur gleichen Zeit betätigten hydraulischen Verbraucher wird über eine Load-Sensing-Leitung LS an einen Druck-Förderstromregler 38 der Verstellpumpe 4 gemeldet, über den ein Schwenkwinkel der Verstellpumpe 4 so eingestellt wird, dass der Pumpendruck um eine bestimmte Druckdifferenz im Bereich von 10 bar bis 20 bar über dem höchsten Lastdruck liegt.

In einer Verbindungsleitung 56 zwischen der Hochdruckleitung HD und der Niederdruckleitung ND ist pflugseitig ein Rückschlagventil 58 angeordnet, das von der Niederdruckleitung ND zur Hochdruckleitung HD öffnet. In einer weiteren Verbindungsleitung zwischen der Hochdruckleitung HD und der Niederdruckleitung ND ist ein Druckbegrenzungsventil 62 angeordnet, das den Druck in der Hochdruckleitung HD begrenzt und bei Überschreiten eines vorbestimmten Maximaldrucks einen Durchfluss in Richtung Niederdruckleitung ND freigibt.

Wenn das Stützrad 10 von keinem Antriebsmoment beaufschlagt werden soll, und wenn dabei die (in der Figur dargestellte) Absperrstellung 0 des Wegeventils 8 gewählt wird, ist durch den Freilauf 18 sicher gestellt, dass das rollende Stützrad 10 kein Drehmoment auf den Hydromotor 14 überträgt. Da die Load-Sensing-Leitung LS dabei über die Tankleitung 30 zum Tank T entlastet ist, weist sie einen minimalen Steuerdruck auf. Dadurch wird die Leistung bzw. das Fördervolumen der Verstellpumpe 4 verringert, falls kein anderer Verbraucher der Mobilhydraulik mit Druckmittel versorgt wird.

Die Schwimmstellung c des Wegeventils 8 ist bei der vorzugsweise verbauten Ventilanordnung "SB23und SB33" der Anmelderin standardmäßig vorgesehen. Diese Stellung des Wegeventils 8 kann entfallen, wenn - wie in der Figur gezeigt - das Rückschlagventil 58 oder/und der Freilauf 18 verbaut ist bzw. sind. Durch eine der beiden Alternativen muss sicher gestellt sein, dass bei zu langsam angetriebenen oder rollendem Stützrad 10 der Hydromotor 14 entweder durch den Freilauf 18 nicht als Pumpe fungieren kann, oder dass das durch den Hydromotor 14 in die Niederdruckleitung ND geförderte Druckmittel über das Rückschlagventil 58 abströmen kann.

Abweichend von dem oben beschriebenen Ausführungsbeispiel kann das Arbeitsgerät auch ein Anhänger sein. Weiterhin kann das Arbeitsgerät oder der Anhänger statt einem antreibbaren Rad auch mehrere antreibbare Räder aufweisen. Als Arbeitsgerät ist auch ein Grubber oder ein eggenähnliches Gerät denkbar, bei dem eine oder mehrere belastete Walzen den erfindungsgemäßen hydraulischen Antrieb aufweisen.

Statt einem Rad können auch Wellen mit mehreren - vorzugsweise zwei - Rädern vom Hydromotor angetrieben werden.

Die Schaltstellung b des Wegeventils 8 kann entfallen, wenn sicher gestellt ist, dass der Bediener der Kombination die Schnellkuppelanschlüsse 20 24 stets paarweise richtig zuordnet.

Offenbart ist ein hydraulischer Hilfsantrieb für ein von einer mobilen Arbeitsmaschine gezogenen oder geschobenem Arbeitsgerät, das über zumindest ein rotierendes Element - z.B. ein Stützrad oder eine Walze - am Boden abgestützt werden kann. Dabei hat der hydraulische Hilfsantrieb eine Verstellpumpe und einen Hydromotor und ist aktivierbar bzw. deaktivierbar. Ein Versorgungsdruck des Hydromotors ist durch eine Maximaldruckbegrenzung (Druckabschneidung) der Verstellpumpe bestimmt. Damit kann dem Hydromotor ein der aktuellen Fahrgeschwindigkeit der mobilen Arbeitsmaschine entsprechendes Schluckvolumen durch Einstellung eines Schwenkwinkels der Verstellpumpe bereit gestellt werden. Des Weiteren wird der Versorgungsdruck des hydraulischen Hilfsantriebs und insbesondere des Hydromotors durch vergleichsweise feine Regelung des Schwenkwinkels der Verstellpumpe im Wesentlichen auf konstantem Niveau gehalten.

## Patentansprüche

1. Kombination aus einer mobilen Arbeitsmaschine und einem Arbeitsgerät, das über zumindest ein rotierendes Element (10) am Boden (12) abstützbar ist, wobei ein hydraulischer Antrieb mit einer Verstellpumpe (4) und einem Hydromotor (14) vorgesehen ist, von dem das rotierende Element (10) drehend antreibbar ist, **dadurch gekennzeichnet dass** ein Versorgungsdruck des Hydromotors (14) durch eine Maximaldruckbegrenzung der Verstellpumpe (4) bestimmt ist.

2. Kombination nach Anspruch 1, wobei der Hydromotor (14) über ein Wegeventil (8) mit der Verstellpumpe (4) verbunden ist.

3. Kombination nach Anspruch 2, wobei das Wegeventil (8) bei aktiviertem Antrieb voll geöffnet (a, b) ist.

4. Kombination nach Anspruch 2 oder 3, wobei das Wegeventil (8) bei deaktiviertem Antrieb in eine Schwimmstellung (c) geschaltet ist.

5. Kombination nach einem der Ansprüche 2 bis 4, wobei das Arbeitsgerät über ein Hubwerk an die mobile Arbeitsmaschine angekoppelt ist, und wobei das Wegeventil (8) in Abhängigkeit von Signalen einer elektronischen Hubwerksregelung (EHR) geregelt ist.

6. Kombination nach einem der Ansprüche 2 bis 5, wobei dem Wegeventil (8) eine Druckwaage (6) zugeordnet ist.

7. Kombination nach Anspruch 6 mit weiteren von der Verstellpumpe (4) versorgbaren Verbrauchern, wobei ein Schwenkwinkel der Verstellpumpe (4) über ein Load-Sensing-System (LS) in Abhängigkeit vom höchsten Lastdruck von gleichzeitig angesteuerten hydraulischen Verbrauchern eingestellt ist.

8. Kombination nach einem der Ansprüche 2 bis 7, wobei der Hydromotor (14) über eine Hochdruckleitung (HD, 22) und eine Niederdruckleitung (ND, 26) mit jeweils einem Schnellkuppelanschluss (20, 24) mit der Verstellpumpe (4) verbunden ist.

9. Kombination nach Anspruch 8, wobei die Verstellpumpe (4), die Druckwaage (6) und das Wegeventil (8) an der mobilen Arbeitsmaschine angeordnet sind, und wobei der Hydromotor (14), ein von der Niederdruckleitung (ND) zur Hochdruckleitung (HD) öffnendes Rückschlagventil (58) und ein von der Hochdruckleitung (HD) zur Niederdruckleitung (ND) öffnendes Druckbegrenzungsventil (62) am Arbeitsgerät angeordnet sind.

10. Kombination nach einem der vorhergehenden Ansprüche, wobei zwischen dem Hydromotor (4) und dem rotierenden Element (10) ein Freilauf (18) angeordnet ist.

11. Kombination nach einem der vorhergehenden Ansprüche, wobei der Hydromotor (14) ein Radialkolbenmotor ist.

12. Kombination nach einem der vorherigen Ansprüche, wobei die mobile Arbeitsmaschine ein Traktor ist, und/oder wobei das Arbeitsgerät ein Aufsattelpflug oder ein Karrenpflug oder eine Kombination aus Aufsattelpflug und Karrenpflug ist.

## Claims

1. Combination of a mobile working machine and a working implement which can be supported on the ground (12) via at least one rotating element (10), wherein a hydraulic drive with a variable displacement pump (4) and a hydraulic motor (14) is provided, by which the rotating element (10) can be driven in a rotating manner, **characterized in that** a supply pressure of the hydraulic motor (14) is determined by a maximum pressure limiting of the variable displacement pump (4).

2. Combination according to Claim 1, wherein the hydraulic motor (14) is connected to the variable displacement pump (4) via a directional control valve (8).

3. Combination according to Claim 2, wherein the directional control valve (8) is fully opened (a, b) when the drive is activated.

4. Combination according to Claim 2 or 3, wherein the directional control valve (8) is switched into a floating position (c) when the drive is deactivated.

5. Combination according to one of Claims 2 to 4, wherein the working implement is coupled to the mobile working machine via a hoisting gear, and wherein the directional control valve (8) is regulated depending on signals of an electronic hoisting gear regulator (EHR).

6. Combination according to one of Claims 2 to 5, wherein the directional control valve (8) is assigned a pressure balance (6).

7. Combination according to Claim 6 with further consumers which can be supplied by the variable displacement pump (4), wherein a pivoting angle of the variable displacement pump (4) is set via a load sensor system (LS) depending on the highest load pressure of simultaneously activated hydraulic consumers.

8. Combination according to one of Claims 2 to 7, wherein the hydraulic motor (14) is connected to the variable displacement pump (4) via a high pressure line (HD, 22) and a low pressure line (ND, 26) by a respective rapid-action coupling connection (20, 24).

9. Combination according to Claim 8, wherein the variable displacement pump (4), the pressure balance (6) and the directional control valve (8) are arranged on the mobile working machine, and wherein the hydraulic motor (14), a nonreturn valve (58) opening from the low pressure line (ND) to the high pressure line (HD) and a pressure-limiting valve (62) opening from the high pressure line (HD) to the low pressure line (ND) are arranged on the working implement.

10. Combination according to one of the preceding claims, wherein a freewheel (18) is arranged between the hydraulic motor (4) and the rotating element (10).

11. Combination according to one of the preceding claims, wherein the hydraulic motor (14) is a radial piston motor.

12. Combination according to one of the preceding claims, wherein the mobile working machine is a tractor, and/or wherein the working implement is a semi-mounted plough or a gallows plough or a combination of a semi-mounted plough and a gallows plough.

## Revendications

1. Combinaison d'un engin de travail mobile et d'un appareil de travail qui peut être supporté par le biais d'au moins un élément rotatif (10) sur le sol (12), un entraînement hydraulique avec une pompe de réglage (4) et un moteur hydraulique (14) étant prévu, par lequel l'élément rotatif (10) peut être entraîné en rotation, **caractérisée en ce qu'**une pression d'alimentation du moteur hydraulique (14) est déterminée par une limitation de pression maximale de la pompe de réglage (4).

2. Combinaison selon la revendication 1, dans laquelle le moteur hydraulique (14) est connecté à la pompe de réglage (4) par le biais d'un distributeur (8).

3. Combinaison selon la revendication 2, dans laquelle la distributeur (8) est complètement ouvert (a, b) lorsque l'entraînement est activé.

4. Combinaison selon la revendication 2 ou 3, dans laquelle le distributeur (8) est commuté dans une position flottante (c) lorsque l'entraînement est désactivé.

5. Combinaison selon l'une quelconque des revendications 2 à 4, dans laquelle l'appareil de travail est accouplé à l'engin de travail mobile par le biais d'un mécanisme de levage, et dans laquelle le distributeur (8) est réglé en fonction de signaux d'une régulation électronique du mécanisme de levage (EHR).

6. Combinaison selon l'une quelconque des revendications 2 à 5, dans laquelle une balance de pesée (6) est associée au distributeur (8).

7. Combinaison selon la revendication 6, comprenant d'autres consommateurs pouvant être alimentés par la pompe de réglage (4), un angle de pivotement de la pompe de réglage (4) étant ajusté par le biais d'un système de détection de charge (LS) en fonction de la pression de charge maximale de consommateurs hydrauliques commandés simultanément.

8. Combinaison selon l'une quelconque des revendications 2 à 7, dans laquelle le moteur hydraulique (14) est connecté à la pompe de réglage (4) par le biais d'une conduite haute pression (HD, 22) et d'une conduite basse pression (ND, 26) à chaque fois avec un raccord rapide (20, 24).

9. Combinaison selon la revendication 8, dans laquelle la pompe de réglage (4), la balance de pesée (6) et le distributeur (8) sont disposés au niveau de l'engin de travail mobile, et dans laquelle le moteur hydraulique (14), un clapet antiretour (58) s'ouvrant depuis la conduite basse pression (ND) vers la conduite haute pression (HD) et une soupape de limitation de la pression (62) s'ouvrant de la conduite haute pression (HD) vers la conduite basse pression (ND) sont disposés au niveau de l'appareil de travail.

10. Combinaison selon l'une quelconque des revendications précédentes, dans laquelle une roue libre (18) est disposée entre le moteur hydraulique (4) et l'élément rotatif (10).

11. Combinaison selon l'une quelconque des revendications précédentes, dans laquelle le moteur hydraulique (14) est un moteur à piston radial.

12. Combinaison selon l'une quelconque des revendications précédentes, dans laquelle l'engin de travail mobile est un tracteur, et/ou dans laquelle l'appareil de travail est une charrue semi-portée ou une charrue à mancheron ou une combinaison d'une charrue semi-portée et d'une charrue à mancheron.
